(19) **Europäisches Patentamt**
**European Patent Office**
**Office européen des brevets**

(11) **EP 4 279 643 A1**

(12) # EUROPEAN PATENT APPLICATION
published in accordance with Art. 153(4) EPC

(43) Date of publication:
**22.11.2023 Bulletin 2023/47**

(21) Application number: **22739477.2**

(22) Date of filing: **14.01.2022**

(51) International Patent Classification (IPC):
**D01F 6/62** $^{(2006.01)}$ **D04H 1/55** $^{(2012.01)}$

(52) Cooperative Patent Classification (CPC):
**D01F 6/62; D04H 1/55**

(86) International application number:
**PCT/JP2022/001042**

(87) International publication number:
**WO 2022/154072 (21.07.2022 Gazette 2022/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.01.2021 JP 2021005731**

(71) Applicant: **Kuraray Co., Ltd.**
**Kurashiki-shi, Okayama 710-0801 (JP)**

(72) Inventors:
• **IMAGAWA, Kaori**
**Kurashiki-shi, Okayama 713-8550 (JP)**
• **KOIZUMI, Satoshi**
**Kurashiki-shi, Okayama 713-8550 (JP)**

(74) Representative: **Müller-Boré & Partner**
**Patentanwälte PartG mbB**
**Friedenheimer Brücke 21**
**80639 München (DE)**

(54) **POLYESTER BINDER FIBER HAVING HIGH ADHESIVE FORCE**

(57) Provided is a polyester binder fiber which contributes to produce a fiber structure having a high strength. The polyester binder fiber may have a $\Delta H$ of 30 J/g or less which is calculated as a difference between a melting endothermic amount $\Delta Hm$ and a crystallization exothermic amount $\Delta Hc$ in a temperature elevation phase as recorded by differential scanning calorimetry (DSC) curve. The polyester binder fiber may have a ratio $(a_1:(a_2 + a_3))$ between a crystalline component fraction $(a_1)$ and a total amount of a constrained amorphous component fraction $(a_2)$ and an amorphous component fraction $(a_3)$ in the range of from 98.0:2.0 to 50.0:50.0 in which the crystalline component fraction $(a_1)$, the constrained amorphous component fraction $(a_2)$, and the amorphous component fraction $(a_3)$ are calculated from a spin-spin relaxation time $T_2$ at 140°C obtained by pulsed nuclear magnetic resonance (NMR) spectroscopy.

EP 4 279 643 A1

**Description**

CROSS REFERENCE TO THE RELATED APPLICATION

This application is based on and claims Convention priority to Japanese patent application No. 2021-005731, filed January 18, 2021, the entire disclosure of which is herein incorporated by reference as a part of this application.

FIELD OF THE INVENTION

The present invention relates to a polyester binder fiber in which formation of crystalline component is suppressed to have an enhanced proportion of binder component.

BACKGROUND OF THE INVENTION

Traditionally, polyvinyl alcohol-based fibers and polyolefin-based fibers are commonly used as binder fibers. Recently, a polyester binder fiber which comprises a blend of a polyester-based resin and a modified resin has drawn attention due to its advantageous physical properties such as mechanical properties, electrical properties, heat resistance, dimensional stability, and hydrophobicity, as well as its cost advantages.
For example, Patent Document 1 (WO2015/152082) discloses a polyester binder fiber which comprises a polyester and a polymer such as a polymethyl methacrylate in a proportion of 0.1 to 5.0% by mass.
Patent Document 2 (WO2018/123986) discloses a polyester binder fiber which comprises a polyester and an amorphous polyetherimide polymer in a proportion of 0.1 to 5.0% by mass.

RELATED ART DOCUMENT

PATENT DOCUMENT

[Patent Document 1] WO2015/152082
[Patent Document 2] WO2018/123986

SUMMARY OF THE INVENTION

As recited in each of Patent Documents 1 and 2, a polyester resin is blended with a modified component derived from another type of resin to alter the characteristics of the polyester-based resin in order to provide a polyester binder fiber with an improved adhesiveness. In the meantime, if a polyester binder fiber can be produced directly from a generic polyester-based resin which is free from any modified component thereto and is used for a subject fiber, it is possible to produce a polyester binder fiber without constraints due to a modified component.
Therefore, an object of the present invention is to provide a polyester binder fiber which makes it possible to produce, even from a generic polyester-based resin, a fiber structure having a high strength.
As a result of intensive research and studies to achieve the above object, the inventors of the present invention have found that even if a polyester-based resin free from a modified component blended thereto is used, a polyester binder fiber with a suppressed range of crystalline component fraction in the resulting fiber can be produced under a specific spinning condition, so that crystallizable amorphous components can remain in the polyester binder fiber and that thus-obtained polyester binder fiber can exhibit an improved adhesiveness due to an enhanced content of binder component that contributes to adhesion. The inventors have thus found that, such a polyester binder fiber can produce a fiber structure having a high strength, and completed the present invention.
That is, the present invention may include the following aspects.

Aspect 1

A polyester binder fiber having a ΔH of 30 J/g or less (preferably 25 J/g or less, more preferably 20 J/g or less, and further preferably 17 J/g or less) which is calculated by the following equation (1):

$$\Delta H = \Delta Hm - \Delta Hc \qquad (1)$$

where ΔHm and ΔHc represent a melting endothermic amount (J/g) and a crystallization exothermic amount (J/g), respectively, in a temperature elevation phase as recorded by differential scanning calorimetry (DSC) curve.

Aspect 2

A polyester binder fiber having a ratio ($a_1$:($a_2$ + $a_3$)) between a crystalline component fraction ($a_1$) and a total amount of a constrained amorphous component fraction ($a_2$) and an amorphous component fraction ($a_3$) in the range of from 98.0:2.0 to 50.0:50.0 (preferably from 97.0:3.0 to 60.0:40.0, more preferably from 96.0:4.0 to 62.5:37.5, further preferably from 90.0:10.0 to 65.0:35.0, even more preferably from 87.0:13.0 to 67.5:32.5, and especially preferably from 85.0:15.0 to 70.0:30.0) in which the crystalline component fraction ($a_1$), the constrained amorphous component fraction ($a_2$), and the amorphous component fraction ($a_3$) are calculated by fitting free induction decay (FID) signals of a spin-spin relaxation time $T_2$ at 140°C obtained by pulsed nuclear magnetic resonance (NMR) spectroscopy to the following formula (2):

$$M(t) = a_1 \exp(-0.5(t/t_1)^2) + a_2 \exp(-(1/W)(t/t_2)^W) + a_3 \exp(t/t_3) \qquad (2)$$

where $a_1$ represents the crystalline component fraction, $a_2$ represents the constrained amorphous component fraction, $a_3$ represents the amorphous component fraction, $t_1$ represents a relaxation time for the crystalline component, $t_2$ represents a relaxation time for the constrained amorphous component, $t_3$ represents a relaxation time for the amorphous component, and W represents a Weibull modulus.

Aspect 3

The polyester binder fiber according to aspect 2, wherein a total amount of the relaxation time $t_2$ for the constrained amorphous component and the relaxation time $t_3$ for the amorphous component is from 0.26 to 1.0 ms (preferably from 0.28 to 0.80 ms, more preferably from 0.30 to 0.60 ms, further preferably from 0.32 to 0.55 ms, and even more preferably from 0.40 to 0.50 ms).

Aspect 4

The polyester binder fiber according to any one of aspects 1 to 3, wherein the polyester binder fiber is an undrawn fiber.

Aspect 5

The polyester binder fiber according to any one of aspects 1 to 4, wherein the polyester binder fiber has a crystallization temperature of from 100 to 250°C (preferably from 105 to 220°C, and more preferably from 105 to 200°C).

Aspect 6

The polyester binder fiber according to any one of aspects 1 to 5, wherein the polyester binder fiber contains a polyethylene terephthalate.

Aspect 7

The polyester binder fiber according to any one of aspects 1 to 6, wherein the polyester binder fiber has an intrinsic viscosity of from 0.4 to 1.1 dL/g (preferably from 0.4 to 1.0 dL/g, more preferably from 0.4 to 0.9 dL/g, and further preferably from 0.4 to 0.8 dL/g).

Aspect 8

The polyester binder fiber according to any one of aspects 1 to 7, wherein the polyester binder fiber has a single fiber fineness of from 0.01 to 10 dtex (preferably from 0.01 to 5.0 dtex, and more preferably from 0.01 to 2.0 dtex).

Aspect 9

The polyester binder fiber according to any one of aspects 1 to 8, wherein the polyester binder fiber has a fiber length of from 0.5 to 50 mm (preferably from 1 to 25 mm, and more preferably from 2 to 15 mm).

Aspect 10

A fiber structure at least comprising: the polyester binder fibers as recited in any one of aspects 1 to 9; and subject fibers, the subject fibers being bonded via the polyester binder fibers.

Aspect 11

The fiber structure according to aspect 10, wherein the subject fibers comprise polyester fibers without crystallization temperature.

It should be noted that any combinations of at least two features disclosed in the claims and/or the specification should also be construed as encompassed by the present invention. Especially, any combinations of two or more of the claims should also be construed as encompassed by the present invention.

The polyester binder fiber according to the present invention can exhibit an excellent adhesiveness in bonding subject fibers, making it possible to produce a fiber structure having a high strength.

DESCRIPTION OF THE EMBODIMENTS

Polyester Binder Fiber

A polyester binder fiber in accordance with a first embodiment of the present invention may have a ΔH of 30 J/g or less which is calculated by the following equation (1):

$$\Delta H = \Delta Hm - \Delta Hc \qquad (1)$$

where ΔHm and ΔHc represent a melting endothermic amount (J/g) and a crystallization exothermic amount (J/g), respectively, in a temperature elevation phase as recorded by differential scanning calorimetry (DSC) curve.

The ΔHc is an absolute value for the amount of heat associated with a crystallization peak on the DSC curve and indicates the amount of heat released in association with crystallization during the temperature elevation phase of the DSC measurement. The ΔHm is an absolute value for the amount of heat associated with a melting peak on the DSC curve and indicates the amount of heat required to melt crystals innate in a polyester binder fiber to be subjected to the DSC measurement and additional crystals formed during the temperature elevation phase. In other words, the ΔH which is expressed as (ΔHm - ΔHc) indicates the amount of heat required to melt crystals innate in a polyester binder fiber to be subjected to the DSC measurement. It should be noted that these amounts of heat concerning the polyester binder fiber are values measured by the method described in the Examples below.

A polyester binder fiber has a ΔH that is adjusted to be in such a specific range, which results in a small difference between the amount ΔHc of heat required in additional crystallization during the temperature elevation phase of the DSC measurement and the amount ΔHm of heat required to melt crystals already present in the polyester binder fiber as well as crystals additionally formed during the temperature elevation phase. Thus, the polyester binder fiber comprises a reduced content of in-fiber innate crystals and has an enhanced proportion of amorphous component. In such a polyester binder fiber, where the polyester binder fiber is heated to a temperature equal to or higher than a crystallization temperature beyond a glass transition point thereof, it is considered that an amorphous component in a polyester-based resin constituting the polyester binder fiber has an increased molecular mobility and achieves an enhanced wettability with a subject fiber, while the amorphous component during being cooled can be crystalized with keeping the wettability with the subject fiber and therefore serves as a component giving rise to an excellent adhesiveness.

A polyester binder fiber in accordance with the first embodiment of the present invention may preferably have a ΔH of 25 J/g or less, more preferably 20 J/g or less, and further preferably 17 J/g or less. The lower limit for the ΔH may be, for example, 1 J/g or more, preferably 3 J/g or more, and more preferably 5 J/g or more, from the viewpoint of imparting to the polyester binder fiber a strength required in a production process of a fiber structure.

Further, a polyester binder fiber in accordance with the first embodiment of the present invention may have a melting endothermic amount ΔHm of 20 to 60 J/g, preferably 25 to 55 J/g, more preferably 30 to 50 J/g, and further preferably 30 to 45 J/g, from the viewpoint of acquiring an improved thermal bondability.

A polyester binder fiber in accordance with a second embodiment of the present invention may have a ratio $(a_1:(a_2 + a_3))$ between a crystalline component fraction $(a_1)$ and a total amount of a constrained amorphous component fraction $(a_2)$ and an amorphous component fraction $(a_3)$ in the range of from 98.0:2.0 to 50.0:50.0 in which the crystalline component fraction $(a_1)$, the constrained amorphous component fraction $(a_2)$, and the amorphous component fraction

($a_3$) are calculated by fitting free induction decay (FID) signals in a spin-spin relaxation time $T_2$ at 140°C obtained by pulsed nuclear magnetic resonance (NMR) spectroscopy to the following formula (2):

$$M(t) = a_1 exp(-0.5(t/t_1)^2) + a_2 exp(-(1/W)(t/t_2)^W) + a_3 exp(t/t_3) \qquad (2)$$

where $a_1$ represents the crystalline component fraction, $a_2$ represents the constrained amorphous component fraction, $a_3$ represents the amorphous component fraction, $t_1$ represents a relaxation time for the crystalline component, $t_2$ represents a relaxation time for the constrained amorphous component, $t_3$ represents a relaxation time for the amorphous component, and W represents a Weibull modulus.

Pulsed NMR is an analytical method used to detect signals (free induction decay (FID) signals) generated in response to pulses in order to determine a $^1$H-nuclear relaxation time which is related to molecular mobility. Where there is a difference in mobility among different components, the signals can be separated into individual mobility components to calculate a relaxation time and a proportion of content of each component. According to the present invention, it has been found that FID signals in a spin-spin relaxation time $T_2$ for a polyester binder fiber can be fit to a specific formula designed to isolate and evaluate three types of components: a crystalline component, a constrained amorphous component, and an amorphous component. Since it is considered, as described, that an amorphous component in a polyester-based resin serves to provide an advantageous adhesiveness, a polyester binder fiber having a ratio ($a_1:(a_2 + a_3)$) between the crystalline component fraction ($a_1$) and a total amount of the constrained amorphous component fraction ($a_2$) and the amorphous component fraction ($a_3$) thereof in such a specific range realizes a relatively large proportion of amorphous component so as to exhibit excellent adhesiveness for bonding subject fibers.

A polyester binder fiber in accordance with the second embodiment of the present invention may preferably have a ratio ($a_1:(a_2 + a_3)$) between the crystalline component fraction ($a_1$) and a total amount of the constrained amorphous component fraction ($a_2$) and the amorphous component fraction ($a_3$) in the range of from 97.0:3.0 to 60.0:40.0, more preferably from 96.0:4.0 to 62.5:37.5, further preferably from 90.0:10.0 to 65.0:35.0, even more preferably from 87.0:13.0 to 67.5:32.5, and especially preferably from 85.0:15.0 to 70.0:30.0, from the viewpoint of achieving an increased adhesiveness. It should be noted that the component fractions and relaxation times of individual components of the polyester binder fiber are values measured by the method described in the Examples below.

Further, for a polyester binder fiber in accordance with the second embodiment of the present invention, a total amount of the relaxation time $t_2$ for the constrained amorphous component and the relaxation time $t_3$ for the amorphous component may be from 0.26 to 1.0 ms, preferably from 0.28 to 0.80 ms, more preferably from 0.30 to 0.60 ms, further preferably from 0.32 to 0.55 ms, and even more preferably from 0.40 to 0.50 ms, from the viewpoint of achieving an improved wettability based on the mobility of amorphous component.

A polyester binder fiber according to the present invention comprises a polyester-based resin. According to the present invention, the polyester-based resin comprises a polycondensate of a dicarboxylic acid and a diol. Examples of the dicarboxylic acid may include an aromatic dicarboxylic acid such as terephthalic acid, isophthalic acid, 2,6-naphthalene dicarboxylic acid, and 4,4'-biphenyl dicarboxylic acid, and an aliphatic dicarboxylic acid such as azelaic acid and sebacic acid. Examples of the diol may include an aliphatic diol such as ethylene glycol, diethylene glycol, propylene glycol, 1,4-butanediol, polyethylene glycol, and polytetramethylene glycol, an aromatic diol such as ethylene oxide adducts of bisphenol A or bisphenol S, and an alicyclic diol such as cyclohexanedimethanol.

A polyester-based resin constituting a polyester binder fiber according to the present invention may be preferably a polyester-based resin containing an aromatic dicarboxylic acid as a main dicarboxylic acid component. Examples of such a polyester-based resin may include a polyethylene terephthalate, a polytetramethylene terephthalate, and a polycyclohexanedimethylene terephthalate. These polyester-based resins may be copolymers containing an additional diol and/or an additional dicarboxylic acid such as isophthalic acid to be copolymerized as a third component. Most preferred among the above is a polyethylene terephthalate.

A polyester binder fiber according to the present invention may also comprise a thermoplastic resin such as a polymethyl methacrylate, a polystyrene, and a polyetherimide to the extent that the effect of the present invention is not spoiled. Nevertheless, it is preferred that a sole resin constituting the binder fiber be the polyester-based resin, from the viewpoint of avoiding any inhomogeneity resulting from blending resins, achieving stable production of fibers, and producing fibers with an excellent quality stability. Moreover, a polyester binder fiber according to the present invention may also comprise at least one additive from a delustering agent, a heat stabilizer, an ultraviolet absorbent, an antistatic agent, a terminating agent, a fluorescent brightening agent, etc., as necessary.

A resin content of a polyester binder fiber according to the present invention may include the polyester-based resin at a proportion of 95% by mass or more, preferably 99% by mass or more, more preferably 99.95% by mass or more, and further preferably 100% by mass. In this context, possible impurities that are inevitably introduced, for example, during a synthesis process for the polyester-based resin and during a preparation process for the polyester binder fiber may also be considered as a part of the polyester-based resin.

A polyester binder fiber according to the present invention may have an intrinsic viscosity of from 0.4 to 1.1 dL/g, preferably from 0.4 to 1.0 dL/g, more preferably from 0.4 to 0.9 dL/g, and further preferably from 0.4 to 0.8 dL/g, from the viewpoint of improving the physical properties of the fiber.

The present invention works as long as the $\Delta H$ of the polyester binder fiber that is determined through the DSC measurement is in a specific range and/or the ratio among the crystalline component fraction ($a_1$), the constrained amorphous component fraction ($a_2$), and the amorphous component fraction ($a_3$) of the polyester binder fiber that are determined through the pulsed NMR spectroscopy is in a specific range. Nevertheless, the polyester binder fiber may be preferably an undrawn fiber, from the viewpoint of achieving even more suppressed formation of innate crystals and increasing the content of a component that serves as a binder.

A polyester binder fiber according to the present invention may have a crystallization temperature of from 100 to 250°C, preferably from 105 to 220°C, and more preferably from 105 to 200°C, from the viewpoint of improving the production processability of a fiber structure and the physical properties of the produced fiber structure. The crystallization temperature herein refers to a peak temperature at a crystallization peak as observed on the DSC curve in a temperature elevation phase obtained by the DSC measurement. More specifically, the crystallization temperature of the polyester binder fiber is a value measured by the method described in the Examples below.

A polyester binder fiber according to the present invention may have a single fiber fineness of from 0.01 to 10 dtex, preferably from 0.01 to 5.0 dtex, and more preferably from 0.01 to 2.0 dtex, from the viewpoint of improving the production processability of a fiber structure and the physical properties of the produced fiber structure. The polyester binder fiber may preferably have a single fiber fineness of from 0.1 to 10 dtex for use in a production of a dry-laid nonwoven fabric, because fibers with too small fineness are prone to cause fiber breakages in the production process of dry-laid nonwoven fabric (e.g., in a process that involves interlacing fibers using a carding machine, etc.). Meanwhile, the polyester binder fiber may preferably have a single fiber fineness of from 0.01 to 10 dtex for use in a production of a wet-laid nonwoven fabric, because the production process of the wet-laid nonwoven fabric (e.g., in a process that employs papermaking through dispersion of fibers in water) is free from mechanical interlacing of fibers, and the fibers are less likely to cause fiber breakages when compared with the production of the dry-laid nonwoven fabric. Further, the polyester binder fiber may preferably have a single fiber fineness of 0.1 to 10 dtex for use in a production of a woven or knitted fabric.

A polyester binder fiber according to the present invention may be a staple fiber and therefore may have a fiber length of, for example, from 0.5 to 50 mm, preferably from 1 to 25 mm, and more preferably from 2 to 15 mm, depending on the type of the fiber structure, etc. The polyester binder fiber may preferably have a fiber length in any one of the above ranges, when intended for use in a production of a paper which is one example of a wet-laid nonwoven fabric, from the viewpoint of improving the production processability of a paper and the physical properties of the produced paper such as its strength. Meanwhile, since, in a production of a dry-laid nonwoven fabric using a carding machine, etc., a web comprising fibers needs to pass through a line continuously without causing a breakage in a traveling direction, the polyester binder fiber may preferably have a fiber length of from 10 to 50 mm, more preferably from 15 to 50 mm, and further preferably from 20 to 50 mm, when intended for use in the production of the dry-laid nonwoven fabric. Moreover, the polyester binder fiber may be mixed with an additional fiber (e.g., a polyester fiber without crystallization peak on a DSC curve) to provide blended fibers with which a woven or knitted fabric is produced and subsequently subjected to heating. The polyester binder fiber may preferably have a fiber length of from 0.5 to 50 mm, where intended for use in the production of the woven or knitted fabric.

A method for producing a polyester binder fiber according to the present invention may include a spinning step of melt spinning a resin material containing the polyester-based resin. In the spinning step, a molten resin can be discharged from spinneret holes in a nozzle to form as-spun fibers, and the as-spun fibers can be taken up to produce fibers.

According to the present invention, crystallization of the polyester-based resin in the polyester binder fiber can be suppressed by controlling the spinning conditions so as not to subject the immediately discharged polyester-based resin to rapid cooling (quenching). More specifically, a molten resin discharged from spinneret holes in a nozzle is generally cooled to form fibrous materials (as-spun fibers) which are further subjected to elongational stress caused by taken-up process, resulting in propagation of crystallization due to molecular orientation (referred to as orientation crystallization hereinafter) in the fibrous materials during cooling. Taking into account the above, a production of a polyester binder fiber with a reduced crystalline component fraction in a specific range can be achieved by keeping the as-spun fibers after being discharged from a nozzle during cooling to have as small change in temperature as possible until the position at 30 cm below the nozzle from the spinneret holes in order to avoid rapid cooling, so that the stress applied to the as-spun fibers can be alleviated to suppress the orientation crystallization of the polyester-based resin.

Where the temperature of the molten polyester at the spinneret holes in the nozzle is expressed as T°C, the temperature of the as-spun fibers at a position 30 cm below the nozzle in the vertical direction may be, for example, (T - 165)°C or higher and T°C or lower, preferably (T - 160)°C or higher and (T - 20)°C or lower, more preferably (T - 145)°C or higher and (T - 40)°C or lower, and further preferably (T - 140)°C or higher and (T - 60)°C or lower.

The way how to achieve small change in temperature of the as-spun fibers from the position of the discharging thereof to the position 30 cm below the nozzle can be realized by controlling, for example, the temperature and the diameter of the nozzle, a discharge rate, a take-up speed, and the velocity and the temperature of cooling air. Although cooling of the as-spun fibers varies depending on depending on a chip viscosity (intrinsic viscosity) or melting point of a polyester-based resin included in the resin material, a desired fineness, etc., the as-spun fibers can be slowly cooled, for example, by decreasing the velocity of the cooling air (e.g., adjusting the velocity of the air to a value within the range of 0.1 to 2.5 m/s) and/or raising the temperature of the cooling air (e.g., adjusting its temperature to a value within the range of 15 to 40°C). According to the present invention, for the purpose of providing process stability, it is preferred to form the fibrous materials by being solidified in the absence of any heating zone directly below the nozzle and by performing cool-down process of the fibrous materials at a slower rate in the manner described above.

The aforementioned polyester-based resin can be used as a polyester-based resin to be included in the resin material. The polyester-based resin may have a chip viscosity (intrinsic viscosity) of from 0.4 to 1.1 dL/g, preferably from 0.4 to 1.0 dL/g, more preferably from 0.4 to 0.9 dL/g, and further preferably from 0.4 to 0.8 dL/g, from the viewpoint of achieving improved spinnability and improving the physical properties of the produced fiber. It should be noted that the chip viscosity (intrinsic viscosity) is a value measured by the method described in the Examples below.

The spinning speed (or take-up speed) employed in the method for producing a polyester binder fiber according to the present invention may be from 500 to 3000 m/min, preferably from 600 to 2000 m/min, and more preferably from 800 to 1500 m/min, from the viewpoint of achieving improved productivity and suppressed orientation crystallization.

The method for producing a polyester binder fiber according to the present invention may also include a drawing step of subjecting a fiber resulting from the spinning step to drawing, as long as the produced polyester binder fiber has a crystalline component fraction that is suppressed to a specific range. Nevertheless, since a drawing step typically facilitates crystallization, the drawing step may preferably be omitted.

Fiber Structure

A polyester binder fiber according to the present invention can be used to bond a subject fiber to produce a fiber structure. As long as the fiber structure comprises at least the polyester binder fiber and the subject fiber, there is no limitation to the form of the fiber structure. While examples of the fiber structure may include various fabrics such as nonwoven fabrics, woven fabrics, and knitted fabrics, nonwoven fabrics are preferred. While there may be mentioned a polyester subject fiber as the subject fiber, the subject fiber may comprise not only a polyester subject fiber but also a different type of subject fiber. For example, for use in the production of a wet-laid nonwoven fabric, the subject fiber may comprise a pulp, other subject fiber(s) for papermaking, etc. In the context of the present invention, a polyester subject fiber refers to a polyester fiber which is drawn to have an amorphous component crystallized (a drawn polyester fiber) - that is, a polyester fiber without crystallization temperature and, in other words, a polyester fiber with substantially no possibility of additional crystallization. Thus, no crystallization peak can be observed on a DSC curve of the polyester subject fiber obtained during a temperature elevation phase of differential scanning calorimetry (DSC).

The polyester subject fiber may contain, as a principal component, the same kind of polyester-based resin as the polyester-based resin constituting the polyester binder fiber, from the viewpoint of producing a fiber structure with a high strength by achieving an improved adhesiveness. The polyester subject fiber may preferably have a fineness of from 0.01 to 20 dtex, more preferably from 0.01 to 15 dtex, and further preferably from 0.01 to 10 dtex, from the viewpoint of improving the production processability of a fiber structure and the physical properties of the produced fiber structure.

The mass ratio (the subject fiber / the polyester binder fiber) of the subject fiber (which comprises at least the polyester subject fiber) to the polyester binder fiber, each constituting the fiber structure (e.g., a wet-laid nonwoven fabric), may be from 95/5 to 5/95, preferably from 80/20 to 20/80, more preferably from 75/25 to 25/75, further preferably from 70/30 to 30/70, and even more preferably from 70/30 to 50/50, from the viewpoint of the physical properties of the fiber structure.

A basis weight and/or a thickness of a fiber structure according to the present invention can be adjusted depending on the type, the application, and the like of the fiber structure. For example, the fiber structure may have a basis weight of from 40 to 120 $g/m^2$, preferably from 50 to 100 $g/m^2$, and more preferably from 60 to 90 $g/m^2$. The fiber structure may have a thickness of from 0.01 to 2 mm, preferably from 0.03 to 1 mm, and more preferably from 0.05 to 0.5 mm. It should be noted that the basis weight and the thickness of the fiber structure are values measured by the method described in the Examples below.

A fiber structure according to the present invention may preferably be a wet-laid nonwoven fabric, and more preferably a paper. A paper that is produced using a polyester binder fiber according to the present invention exhibits a high strength. While a tensile strength (paper strength) of the paper may vary with the thickness of the paper, the paper may have a tensile strength of, for example, 7.0 kg/15mm or more, preferably 8.0 kg/15mm or more, and more preferably 9.0 kg/15mm or more, where the thickness of the paper is on the order of 0.1 to 0.2 mm. While there is no specific limitation to the upper limit of the tensile strength, the upper limit of the tensile strength may be about 30 kgll5mm.

It should be noted that the paper strength of the paper is a value measured by the method described in the Examples below.

Such a fiber structure can be produced by means of a known or commonly used process by using the polyester binder fiber. For example, a dry-laid nonwoven fabric can be produced by forming a web without using water by means of a carding machine, etc. and subsequently heating the web to bond the subject fibers with the polyester binder fiber. The polyester binder fiber may preferably be incorporated in an amount of 5 to 95% by mass relative to that of the subject fiber, in order to utilize the function of the polyester binder fiber as a binder in the production of a dry-laid nonwoven fabric.

Meanwhile, a wet-laid nonwoven fabric can be produced by forming a web with the use of water in its production process and subsequently drying the web as necessary, followed by heating the web to bond the subject fibers with the binder fiber. Particular examples of a method used to form a web with the use of water in the production process of the wet-laid nonwoven fabric may include a papermaking method in which a paper-like web is prepared through the dispersion of fibers in water, and a hydroentanglement method in which a web is formed without the use of water and water is subsequently used in such a way to entangle fibers in the web.

In a production of a paper which is one example of a wet-laid nonwoven fabric, the polyester binder fiber for papermaking may be cut, after spinning, into a cut length of from 0.5 to 50 mm, and preferably from 2 to 15 mm and fed to a papermaking machine. The polyester binder fibers each having a cut length that is too short tend to exhibit insufficient adhesiveness for binding subject fibers, while the polyester binder fibers each having a cut length that is too long tend to be easily intertwined with each other and tend to result in poor in-water dispersibility.

Any known method can be used as the papermaking method. For example, a cylinder machine papermaking process, a Tanmo machine papermaking process, and other process can be used.

After a paper-like web is formed, the web may be subjected to drying which can be carried out using a known device. After the web is dried, the web can be subjected to pressing process at a high temperature to produce a paper. After being heated at a temperature which is a crystallization temperature or higher and lower than a melting point of the polyester binder fiber during the pressing process, the polyester binder fiber can be crystallized in a state of binding the subject fibers, causing the subject fibers to be bonded therewith.

In particular, the pressing process may be carried out at a temperature of, for example, from 150 to 250°C, preferably from 160 to 245°C, and more preferably from 180 to 240°C. The duration of a treatment at a high temperature during the pressing process may last for 15 minutes or shorter, preferably 12 minutes or shorter, and more preferably 10 minutes or shorter. As a result of the polyester binder fiber comprising an amorphous component being heated to a temperature that is equal to or higher than a crystallization temperature of the polyester binder fiber during the pressing process, the produced paper can acquire a high paper strength. It should be noted that a polyester binder fiber experiences crystallization of amorphous component as it is heated to or beyond a crystallization temperature and will no longer exhibit a crystallization temperature, resulting in the loss of a crystallization peak on a DSC curve thereof.

EXAMPLES

Hereinafter, the present invention will be demonstrated by way of some examples that are presented only for the sake of illustration, which are not to be construed as limiting the scope of the present invention. It should be noted that in the following Examples and Comparative Examples, various physical properties were evaluated in the following manners.

Chip Viscosity (Intrinsic Viscosity)

The chip viscosity (intrinsic viscosity) (dL/g) of a resin prior to spinning and the intrinsic viscosity (dL/g) of an obtained polyester binder fiber were measured using an automatic viscometer ("SS-600-L1" available from Shibayama Scientific Co., Ltd.) The solvent used for the measurement was a mixed solvent of phenol/tetrachloroethane (with a volume ratio of 1/1) at 30°C.

Temperature of As-spun Fiber

Using a temperature measurement sensor (available from Anritsu Meter Co., Ltd.), a temperature of an as-spun fiber at a position of its discharging from a nozzle was measured by bringing a sensing potion of the sensor into contact with the as-spun fiber at a position immediately after the discharging of the as-spun fiber from the nozzle (1 cm below the nozzle).

Using a temperature measurement sensor (available from Anritsu Meter Co., Ltd.), a temperature of the as-spun fiber at a position 30 cm below the nozzle was measured by bring the sensing portion of the sensor into contact with the as-spun fiber at the position 30 cm below the nozzle.

Single Fiber Fineness

A single fiber fineness (dtex) was determined in accordance with JIS L 1015 "Test methods for man-made staple fibers" 8.5.1.

Differential Scanning Calorimetry

After weighing 3 to 8 mg of a polyester binder fiber as a test sample, differential scanning calorimetry was performed on the test sample using a differential scanning calorimeter ("DSC-60" available from Shimadzu Corporation) under a nitrogen atmosphere at an elevation rate of 10°C/min from a room temperature (at 25°C) to 300°C. A crystallization exothermic amount $\Delta$Hc (J/g) at a crystallization peak that appeared as a result of crystallization and a melting endothermic amount $\Delta$Hm (J/g) at a melting peak that appeared as a result of melting of crystals, both of which occurred during the temperature elevation and were attributable to polyester resin, were identified from the observed DSC curve and used to calculate a $\Delta$H according to the following equation (1):

$$\Delta H \text{ (J/g)} = \Delta Hm \text{ (J/g)} - \Delta Hc \text{ (J/g)} \qquad (1).$$

Further, was identified a peak temperature Tc (°C) at the crystallization peak that appeared as a result of crystallization during the temperature elevation.

Pulsed Nuclear Magnetic Resonance Spectroscopy

A 100-mg sample obtained from a polyester binder fiber was introduced into an NMR tube which, in turn, was immersed in a constant temperature bath at 140°C for 10 minutes to be used as a test sample. A $^1$H spin-spin relaxation time $T_2$ of the test sample was measured using a pulsed nuclear magnetic resonance spectrometer ("minispec mq20 WVT" available from Bruker BioSpin). The following conditions were applied for the measurement:

Pulse Sequence: a solid-echo method (90x - $\tau$ - 90y)
RF Pulse Width (Pw1):2.1 $\mu$s
Pulse Interval (Pi1): 1 $\mu$s
Pulse Repetition Time: 4s
Measurement Temperature: 140°C

Free induction decay (FID) signals as obtained by the above spectroscopy were fit by a linear least-squares method to the following formula (2) to determine a crystalline component fraction ($a_1$), a constrained amorphous component fraction ($a_2$), and an amorphous component fraction ($a_3$), each having a positive value. Further, from the result of the fitting to the following formula (2), a relaxation time ($t_1$) for the crystalline component, a relaxation time ($t_2$) for the constrained amorphous component, and a relaxation time ($t_3$) for the amorphous component were likewise determined:

$$M(t) = a_1 \exp(-0.5(t/t_1)^2) + a_2 \exp(-(1/W)(t/t_2)^W) + a_3 \exp(t/t_3) \qquad (2)$$

Basis Weight

A basis weight ($g/m^2$) of a paper was measured by the test method in accordance with JIS P 8124.

Thickness

A thickness (mm) of a paper was measured by the test method in accordance with JIS P 8118.

Paper Strength (Tensile Strength)

A paper strength (tensile strength) (kg/15mm) of a paper was measured by the test method in accordance with JIS P 8113.

Example 1

A polyethylene terephthalate resin with a chip viscosity (intrinsic viscosity) of 0.587 dL/g was fed to a melt extruder to be molten, and the molten resin was discharged from a spinning nozzle to form as-spun fibers (at a nozzle (spinneret) surface temperature of 280°C), followed by being cooled below the nozzle with cooling air at a velocity of 1.7 m/s and at a temperature of 30°C and taken up at a rate of 1320 m/min to produce a polyester binder fiber having physical properties listed in Table 1.

The polyester binder fibers each cut into 5 mm in length and polyester subject fibers ("EP-053" available from Kuraray Co., Ltd.; single fiber fineness: 0.8 dtex, cut length: 5 mm) were put into a water bath in a disintegrator (available from Tester Sangyo Co., Ltd.) at a mass ratio of the subject fiber to the binder fiber (subject fiber / binder fiber) of 55/45. After disintegration of the fibers in water at a rate of 3000 rpm for 1 minute, papermaking was conducted using a TAPPI papermaking machine (available from Kumagai Riki Kogyo Co., Ltd.) so as to obtain a web. Then, the obtained web was pressed under a pressure of 3.5 kg/cm$^2$ for 30 seconds using a press machine (available from Kumagai Riki Kogyo Co., Ltd.) to adjust the moisture content thereof, and dried at 120°C for 1 minute using a rotary dryer (available from Kumagai Riki Kogyo Co., Ltd.) to prepare a paper-like wet-laid nonwoven fabric. The resulting paper-like wet-laid nonwoven fabric was subjected to a heat press treatment by passing the fabric between heated press rollers (at 180°C and with a clearance of 0.1 mm) at a rate of 3 m/min, causing the polyester subject fibers to be bonded with the polyester binder fibers and at the same time resulting in the loss of a crystallization temperature of the polyester binder fiber. As a result, a paper (in the form of a 15 mm × 100 mm strip) comprising polyester fibers without crystallization temperature was produced. Table 1 lists the evaluation results of the physical properties of the produced paper.

Example 2

Except for the use of a polyethylene terephthalate resin with a chip viscosity (intrinsic viscosity) of 0.576 dL/g and the application of cooling air at a velocity of 1.1 m/s and a temperature of 30°C for cooling below a nozzle, a polyester binder fiber was produced in the same process as that in Example 1. Table 1 lists the physical properties of the obtained polyester binder fiber. Furthermore, a paper was produced in the same way as that in Example 1 by using the obtained polyester binder fiber. Table 1 also lists the evaluation results of the physical properties of the produced paper.

Example 3

Except for the use of a polyethylene terephthalate resin with a chip viscosity (intrinsic viscosity) of 0.576 dL/g and the application of cooling air at a velocity of 1.4 m/s and a temperature of 30°C for cooling below a nozzle, a polyester binder fiber was produced in the same process as that in Example 1. Table 1 lists the physical properties of the obtained polyester binder fiber. Furthermore, a paper was produced in the same way as that in Example 1 by using the prepared polyester binder fiber. Table 1 also lists the evaluation results of the physical properties of the produced paper.

Example 4

Except for the use of a polyethylene terephthalate resin with a chip viscosity (intrinsic viscosity) of 0.576 dL/g and the application of cooling air at a velocity of 1.4 m/s and a temperature of 25°C for cooling below a nozzle, a polyester binder fiber was produced in the same process as that in Example 1. Table 1 lists the physical properties of the obtained polyester binder fiber. Furthermore, a paper was produced in the same way as that in Example 1 by using the prepared polyester binder fiber. Table 1 also lists the evaluation results of the physical properties of the produced paper.

Example 5

Except for the use of a polyethylene terephthalate resin with a chip viscosity (intrinsic viscosity) of 0.576 dL/g and the application of cooling air at a velocity of 2.0 m/s and a temperature of 25°C for cooling below a nozzle, a polyester binder fiber was produced in the same process as that in Example 1. Table 1 lists the physical properties of the obtained polyester binder fiber. Furthermore, a paper was produced in the same way as that in Example 1 by using the prepared polyester binder fiber. Table 1 also lists the evaluation results of the physical properties of the produced paper.

Comparative Example 1

Except for the use of a polyethylene terephthalate resin with a chip viscosity (intrinsic viscosity) of 0.576 dL/g and the application of cooling air at a velocity of 2.0 m/s and a temperature of 20°C for cooling below a nozzle, a polyester binder fiber was produced in the same process as that in Example 1. Table 1 lists the physical properties of the obtained polyester binder fiber. Furthermore, a paper was produced in the same way as that in Example 1 by using the prepared polyester binder fiber. Table 1 also lists the evaluation results of the physical properties of the produced paper.

Table 1

| | | | Example 1 | Example 2 | Example 3 | Example 4 | Example 5 | Comparative Example 1 |
|---|---|---|---|---|---|---|---|---|
| Binder Fiber Production Conditions | Polyester Chip Viscosity | dL/g | 0.587 | 0.576 | 0.576 | 0.576 | 0.576 | 0.576 |
| | Nozzle Surface Temperature | °C | 280 | 280 | 280 | 280 | 280 | 280 |
| | Cooling Air Velocity | m/s | 1.7 | 1.1 | 1.4 | 1.4 | 2.0 | 2.0 |
| | Cooling Air Temperature | °C | 30 | 30 | 30 | 25 | 25 | 20 |
| | As-spun Fiber Temperature At Position Of Discharging From Nozzle | °C | 250 | 250 | 250 | 250 | 250 | 250 |
| | As-spun Fiber Temperature At Position 30cm Below Nozzle | °C | 140 | 180 | 160 | 140 | 100 | 80 |
| | Temperature Change From Discharging To 30cm Therebelow | °C | 110 | 70 | 90 | 110 | 150 | 170 |
| Binder Fiber Physical Properties | Intrinsic Viscosity | dL/g | 0.582 | 0.371 | 0.571 | 0.571 | 0.571 | 0.585 |
| | Single Fiber Fineness | dtex | 1.43 | 1.43 | 1.43 | 1.43 | 1.43 | 1.43 |
| | $\Delta Hm$ | J/g | 43.1 | 34.7 | 42.0 | 40.2 | 54.8 | 64.7 |
| | $\Delta Hc$ | J/g | 26.3 | 24.4 | 27.4 | 20.5 | 25.9 | 30.5 |
| | $\Delta H$ | J/g | 16.8 | 10.4 | 14.6 | 19.7 | 28.9 | 34.2 |
| | Crystallization Temperature (Tc) | °C | 128.7 | 126.6 | 126.2 | 123.4 | 122.7 | 120.5 |
| | Crystalline Component Fraction ($a_1$) | % | 82.9 | 79.8 | 80.0 | 83.1 | 96.3 | 98.5 |
| | Constrained Amorphous Component Fraction ($a_2$) | % | 8.1 | 9.5 | 10.8 | 8.5 | 3.2 | 1.2 |
| | Amorphous Component Fraction ($a_1$) | % | 9.0 | 10.7 | 9.2 | 8.4 | 0.5 | 0.3 |
| | $a_1:(a_2 + as)$ | N/A | 82.9:17.1 | 79.8:20.2 | 80.0:20.0 | 83.1:16.9 | 96.3:3.7 | 98.5:1.5 |
| | Crystalline Component Relaxation Time ($t_1$) | ms | 0.018 | 0.019 | 0.018 | 0.018 | 0.018 | 0.018 |
| | Constrained Amorphous Component Relaxation Time ($t_2$) | ms | 0.060 | 0.070 | 0.056 | 0.059 | 0.051 | 0.046 |
| | Amorphous Component Relaxation Time ($t_3$) | ms | 0.373 | 0.390 | 0.378 | 0.406 | 0.252 | 0.204 |
| | $t_2 + t_3$ | ms | 0.433 | 0.460 | 0.434 | 0.465 | 0.303 | 0.250 |

| | | | Example 1 | Example 2 | Example 3 | Example 4 | Example 5 | Comparative Example 1 |
|---|---|---|---|---|---|---|---|---|
| Paper Physical Properties | Basis Weight | g/m$^2$ | 79 | 81 | 80 | 81 | 80 | 80 |
| | Thickness | mm | 0.15 | 0.14 | 0.15 | 0.14 | 0.14 | 0.14 |
| | Paper Strength (Tensile Strength) | kg/ 15mm | 9.4 | 10.0 | 9.7 | 10.3 | 8.1 | 6.8 |

As shown in Table 1, since the polyester binder fiber of Comparative Example 1 fails to have the ΔH and the ratio among the crystalline component fraction ($a_1$), the constrained amorphous component fraction ($a_2$), and the amorphous component fraction ($a_3$) in specific ranges defined above, the paper produced from such a polyester binder fiber exhibits a poor paper strength.

On the other hand, the conditions of production of the polyester binder fiber in each of Examples 1 to 5 are controlled so that the ΔH and the ratio among the crystalline component fraction ($a_1$), the constrained amorphous component fraction ($a_2$), and the amorphous component fraction ($a_3$) of the resulting polyester binder fiber are controlled within those specific ranges. The paper produced by using such a polyester binder fiber exhibits a paper strength exceeding that of Comparative Example 1 and therefore shows that the polyester binder fiber is able to provide an excellent adhesiveness.

INDUSTRIAL APPLICABILITY

A polyester binder fiber according to the present invention is suitable for use as a binder fiber for a fiber structure comprising a subject fiber (in particular, a polyester subject fiber).

Although the present invention has been fully described in connection with the preferred embodiments, various additions, modifications, and omissions are possible without departing from the principle of the present invention. Accordingly, such additions, modifications, and omissions are to be construed as included in the scope of the present invention.

**Claims**

1. A polyester binder fiber having a ΔH of 30 J/g or less which is calculated by the following equation (1):

$$\Delta H = \Delta Hm - \Delta Hc \qquad (1)$$

where ΔHm and ΔHc represent a melting endothermic amount (J/g) and a crystallization exothermic amount (J/g), respectively, in a temperature elevation phase as recorded by differential scanning calorimetry (DSC) curve.

2. A polyester binder fiber having a ratio ($a_1:(a_2 + a_3)$) between a crystalline component fraction ($a_1$) and a total amount of a constrained amorphous component fraction ($a_2$) and an amorphous component fraction ($a_3$) in the range of from 98.0:2.0 to 50.0:50.0 in which the crystalline component fraction ($a_1$), the constrained amorphous component fraction ($a_2$), and the amorphous component fraction ($a_3$) are calculated by fitting to a free induction decay (FID) signals of a spin-spin relaxation time $T_2$ at 140°C obtained by pulsed nuclear magnetic resonance (NMR) spectroscopy to the following formula (2):

$$M(t) = a_1 exp(-0.5(t/t_1)^2) + a_2 exp(-(1/W)(t/t_2)^W) + a_3 exp(t/t_3) \qquad (2)$$

where $a_1$ represents the crystalline component fraction, $a_2$ represents the constrained amorphous component fraction, as represents the amorphous component fraction, $t_1$ represents a relaxation time for the crystalline component, $t_2$ represents a relaxation time for the constrained amorphous component, $t_3$ represents a relaxation time for the amorphous component, and W represents a Weibull modulus.

3. The polyester binder fiber according to claim 2, wherein a total amount of the relaxation time $t_2$ for the constrained amorphous component and the relaxation time $t_3$ for the amorphous component is from 0.26 to 1.0 ms.

4. The polyester binder fiber according to any one of claims 1 to 3, wherein the polyester binder fiber is an undrawn fiber.

5. The polyester binder fiber according to any one of claims 1 to 4, wherein the polyester binder fiber has a crystallization temperature of 100 to 250°C.

6. The polyester binder fiber according to any one of claims 1 to 5, wherein the polyester binder fiber contains a polyethylene terephthalate.

7. The polyester binder fiber according to any one of claims 1 to 6, wherein the polyester binder fiber has an intrinsic viscosity of from 0.4 to 1.1 dL/g.

8. The polyester binder fiber according to any one of claims 1 to 7, wherein the polyester binder fiber has a single fiber fineness of from 0.01 to 10 dtex.

9. The polyester binder fiber according to any one of claims 1 to 8, wherein the polyester binder fiber has a fiber length of from 0.5 to 50 mm.

10. A fiber structure at least comprising: the polyester binder fibers as recited in any one of claims 1 to 9; and subject fibers, the subject fibers being bonded via the polyester binder fibers.

11. The fiber structure according to claim 10, wherein the subject fibers comprise polyester fibers without crystallization temperature.

## INTERNATIONAL SEARCH REPORT

| International application No. |
| --- |
| **PCT/JP2022/001042** |

**A. CLASSIFICATION OF SUBJECT MATTER**

*D01F 6/62*(2006.01)i; *D04H 1/55*(2012.01)i
FI: D01F6/62 302A; D01F6/62 306C; D04H1/55

According to International Patent Classification (IPC) or to both national classification and IPC

**B. FIELDS SEARCHED**

Minimum documentation searched (classification system followed by classification symbols)

D01F1/00-9/04; D04H1/55

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2018/123986 A1 (KURARAY CO) 05 July 2018 (2018-07-05) claims 1-11, examples | 1-11 |
| X | WO 2014/021084 A1 (KURARAY CO) 06 February 2014 (2014-02-06) claims 1, 2, paragraph [0046], reference example 1 | 1-11 |
| A | JP 2018-204153 A (NIPPON ESTER CO LTD) 27 December 2018 (2018-12-27) | 1-11 |
| A | JP 2003-89958 A (TEIJIN LTD) 28 March 2003 (2003-03-28) | 1-11 |
| A | JP 57-133217 A (KURARAY CO) 17 August 1982 (1982-08-17) | 1-11 |
| A | JP 2007-131777 A (NIPPON ESTER CO LTD) 31 May 2007 (2007-05-31) | 1-11 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **03 March 2022** | **15 March 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/001042**

| Patent document cited in search report | | | Publication date (day/month/year) | Patent family member(s) | | | Publication date (day/month/year) |
|---|---|---|---|---|---|---|---|
| WO | 2018/123986 | A1 | 05 July 2018 | US | 2019/0309456 | A1 | |
| | | | | claims, examples | | | |
| | | | | EP | 3561161 | A1 | |
| | | | | CN | 110100050 | A | |
| WO | 2014/021084 | A1 | 06 February 2014 | US | 2015/0140306 | A1 | |
| | | | | claims 1, 2, paragraph [0068], reference example 1 | | | |
| | | | | EP | 2881421 | A1 | |
| | | | | CN | 104508018 | A | |
| | | | | KR | 10-2015-0040867 | A | |
| | | | | TW | 201413084 | A | |
| JP | 2018-204153 | A | 27 December 2018 | (Family: none) | | | |
| JP | 2003-89958 | A | 28 March 2003 | (Family: none) | | | |
| JP | 57-133217 | A | 17 August 1982 | (Family: none) | | | |
| JP | 2007-131777 | A | 31 May 2007 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021005731 A
- WO 2015152082 A
- WO 2018123986 A